Europäisches Patentamt

European Patent Office

Office européen des brevets

(11) Veröffentlichungsnummer: **0 339 448**
**A1**

## EUROPÄISCHE PATENTANMELDUNG

(21) Anmeldenummer: 89106980.9

(22) Anmeldetag: 19.04.89

(51) Int. Cl.⁴: **A01N 25/30** , **A01N 31/02** ,
**A01N 31/08** , **A01N 35/02** ,
**A01N 37/16** , **A01N 59/00** ,
**A01N 59/12**

(30) Priorität: 27.04.88 DE 3814201

(43) Veröffentlichungstag der Anmeldung:
02.11.89 Patentblatt 89/44

(84) Benannte Vertragsstaaten:
ES

(71) Anmelder: **Henkel Kommanditgesellschaft auf Aktien**
**Postfach 1100 Henkelstrasse 67**
**D-4000 Düsseldorf 1(DE)**

(72) Erfinder: **Guhl, Walter, Dr.**
**Wiedenhoferstrasse 27**
**D-5657 Haan(DE)**
Erfinder: **Glasmann, Walter, Dr.**
**Benrather Schossallee 107**
**D-4000 Düsseldorf 13(DE)**
Erfinder: **Glasl, Johann, Dr.**
**Baverterstrasse 58**
**D-5650 Solingen 19(DE)**

(54) Parasitenabtötende Desinfektionsmittel.

(57) Zur Bekämpfung und Abtötung von parasitären, invasionsfähigen Dauerformen eignen sich wässrige Desinfektionsmittelzusammensetzungen auf der Basis von Gemischen aus Desinfektionswirkstoffen und oberflächenaktiven Wirkstoffen, die

    a) mindestens einen Desinfektionswirkstoff aus der aus aliphatischen Aldehyden mit 1 bis 5 C-Atomen, aliphatischen Alkoholen mit 1 bis 4 C-Atomen, unsubstituierten und substituierten Phenolen, Aktivchlor- Aktivsauerstoff- und Aktivjodverbindungen bestehenden Gruppe und

    b) mindestens ein Sulfattensid der allgemeinen Formel (I)

$$R^1 - O - (C_nH_{2n}O)_m - SO_3 M \qquad (I)$$

in der $R^1$ für einen geradkettigen oder verzweigten, Alkyl-oder Alkenylrest mit 8 bis 18 C-Atomen, M für Wasserstoff, Lithium, Natrium, Kalium, Ammonium, $C_{1-4}$-Alkylammonium oder $C_{1-4}$-Alkanolammonium, n für 2 oder 3 und m für eine Zahl von 0 bis 15 stehen,

enthalten.

EP 0 339 448 A1

## Parasitenabtötende Desinfektionsmittel

Die Erfindung betrifft Desinfektionsmittel zur Bekämpfung und Abtötung von parasitären Dauerformen auf der Basis von Gemischen aus desinfizierenden Wirkstoffen und oberflächenaktiven Wirkstoffen.

Die landwirtschaftliche Haltung und Zucht verschiedener Tierarten, beispielsweise Geflügel, Schweine oder Rinder, wird dadurch beeinträchtigt bzw. die Zuchterfolge werden dadurch gemindert, daß die genannten Tierarten von Coccidien und Spulwürmern befallen werden. Diese Parasitenarten schmarotzen im Darmtrakt und schädigen die Tiere durch Nährstoffentzug, Saug- und Einwanderungswunden und führen bei Massenbefall einzelner Tiere zu Leistungsdepression, Kümmern oder Tod, weil u.a. die von den Parasiten ausgeschiedenen Toxine auf das organische Gleichgewicht der Nutztiere einwirken.

Eine gezielte Wurm- bzw. Coccidienbekämpfung kann jedoch nicht darauf beschränkt werden, den von den Parasiten befallenen Nutztieren Wurm- bzw. Coccidienmittel zu verfüttern, um die Parasiten im Darmkanal abzutöten. Vielmehr muß bei der Parasitenbekämpfung berücksichtigt werden, daß die Schmarotzer sehr widerstandsfähige parasitäre Dauerformen (Spulwurmeier, Coccidienoozysten) ausscheiden, die mit dem Kot der befallenen Nutztiere an die Außenwelt gelangen und den Stall verseuchen. Diese Dauerformen sind erneut invasionsfähig, d.h. sie können wieder in den Nährstoffkreislauf der Nutztiere Eingang finden und dadurch von neuem in den Organismus der Nutztiere gelangen. Die Folge ist ein erneuter Befall mit Coccidien bzw. Spulwürmern.

Üblicherweise wird daher - in Ergänzung zu einer Verfütterung von Anti-Parasitenmitteln - gegen die ausgeschiedenen, wiederstandsfähigen Dauerformen der Parasiten eine Spezialdesinfektion der Stallungen durchgeführt, wodurch die Dauerformen abgetötet werden und der Kreislauf (Ausscheidung der Parasitendauerformen und Wiederaufnahme über den Kot) durch Desinfektion wirksam unterbrochen wird.

Für derartige Stalldesinfektionsmaßnahmen sind bereits Spezialdesinfektionsmittel auf der Basis von phenolischen Wirkstoffen und Schwefelkohlenstoff erfolgreich in Gebrauch. Dem Schwefelkohlenstoff fällt dabei die Aufgabe zu, die sehr festen Membranen der Parasiteneier oder -oozysten zu durchdringen und den phenolischen Wirkstoff zur Abtötung des Ei-bzw. Oozysteninhaltes in das Innere der Parasitendauerformen einzuschleusen. Der Einsatz von Schwefelkohlenstoff für derartige Zwecke ist jedoch wegen der hohen Explosionsgefahr von $CS_2$ und seiner starken Toxizität nicht unbedenklich.

In der DE-OS 23 17 225 wird zur Überwindung dieser Nachteile ein Mittel zur Stalldesinfektion auf der Basis von desinfizierend wirkenden Phenolen oder Phenolderivaten und einem die Membranen der parasitären Dauerformen durchdringenden Lösungsmittel vorgeschlagen, das als Lösungsmittel eine Kombination aus Perchlorethylen und einem niederen Alkohol enthält. Nachteil dieser Zusammensetzung zur Desinfektion gegen parasitäre, invasionsfähige Dauerformen ist jedoch der Anteil an Perchlorethylen, der mit 10 bis 50 Gew-% ausgesprochen hoch liegt. Chlorierte Kohlenwasserstoffe sind, wie inzwischen allgemein bekannt, als ausgesprochen langlebige Umweltgifte erkannt worden, die sich insbesondere im Fettgewebe höherer Organismen anreichern und in der Nahrungskette zu Dauerschäden in höheren Organismen führen können. Zudem erwiesen sich Mittel mit einem Gehalt an chlorierten Kohlenwasserstoffen in der Praxis als nicht so wirksam, daß sich diese hätten durchsetzen können. Aus ökologischen und ökonomischen Gründen sollte deswegen auf die Verwendung chlorierter Kohlenwasserstoffe in Desinfektionsmitteln zur Bekämpfung parasitärer Dauerformen weitgehend, besser vollständig, verzichtet werden.

Der Erfindung lag die Aufgabe zugrunde, Desinfektionsmittel für die Verwendung in der Bekämpfung und Abtötung parasitärer Dauerformen, wie Spulwurmeier oder Coccidienoozysten zur Verfügung zu stellen, die die genannten Nachteile des Standes der Technik nicht aufweisen. So sollte eine gezielte Wirksamkeit der Desinfektionsmittel gegen die genannten parasitären invasionsfähigen Dauerformen mit einer guten Handhabbarkeit kombiniert, d.h. insbesondere die aus der Verwendung von Schwefelkohlenstoff bekannte Explosionsgefahr bzw. Toxizität völlig vermieden werden. Zudem sollten ausschließlich Bestandteile in den Desinfektionsmitteln Verwendung finden, die keine Umweltgefährdung mit sich bringen, wie sie von chlorierten Kohlenwasserstoffen bekannt ist. Erwünscht war außerdem eine desinfizierende Wirkung auch gegenüber sonstigen, in Tierstallungen auftretenden Schädlingen, wie Pilzen, Bakterien oder Viren, deren Bekämpfung auf diese Weise gleichzeitig mit der Bekämpfung schwierig abzutötender parasitärer Formen erfolgen könnte.

Die Erfindung betrifft wässrige Desinfektionsmittelzusammensetzungen zur Bekämpfung und Abtötung von parasitären, in vasionsfähigen Dauerformen auf der Basis von Gemischen aus Desinfektionswirkstoffen und oberflächenaktiven Stoffen, die dadurch gekennzeichnet sind, daß sie

a) mindestens einen Desinfektionswirkstoff aus der aus aliphatischen Aldehyden mit 1 bis 5 C-Atomen, aliphatischen Alkoholen mit 1 bis 4 C-Atomen, unsubstituierten und substituierten Phenolen, Aktivchlor-, Aktivsauerstoff- und Aktivjodverbindungen bestehenden Gruppe und

b) mindestens ein Sulfattensid der Formel (I)

$$R^1 - O - (C_nH_{2n}O)_m - SO_3M \quad (I)$$

in der $R^1$ für einen geradkettigen oder verzweigten Alkyl- oder Alkenylrest mit 8 bis 18 C-Atomen, M für Wasserstoff, Lithium, Natrium, Kalium, Ammonium, $C_{1-4}$-Alkylammonium oder $C_{1-4}$-Alkanolammonium, n für 2 oder 3 und m für eine Zahl von 0 bis 15 stehen, enthalten.

Die Erfindung betrifft außerdem die Verwendung der genannten Desinfektionsmittel zur Bekämpfung und Abtötung von parasitären, invasionsfähigen Dauerformen.

Die erfindungsgemäßen wässrigen Desinfektionsmittelzusammensetzungen zur Bekämpfung und Abtötung parasitärer, invasionsfähiger Dauerformen, insbesondere von Spulwurmeiern und Coccidienoozysten, enthalten im wesentlichen zwei Gruppen von Wirkstoffen: desinfizierend wirkende Substanzen und Sulfattenside der Formel (I) als oberflächenaktive Wirkstoffe. Gegebenenfalls können, wie weiter unten ausgeführt, noch andere Tenside und Desinfektionswirkstoffe sowie in derartigen Desinfektionsmitteln übliche Duft- und/oder Hilfsstoffe in den erfindungsgemäßen Mitteln enthalten sein. Als Lösemittel, das die Homogenität und Lagerbeständigkeit der Mittel wesentlich verbessert und ihre Auflösbarkeit in Wasser bei der Herstellung gebrauchsfertiger Desinfektionslösungen erleichtert, ist in den erfindungsgemäßen Desinfektionsmittelzusammensetzungen Wasser enthalten.

Als aliphatische Aldehyde kommen Formaldehyd, Acetaldehyd, Propionaldehyd, Butylaldehyd, Valeraldehyd und Dialdehyde wie beispielsweise Glyoxal oder Glutardialdehyd, in Frage. Von den genannten Aldehyden sind Formaldehyd, Glyoxal und Glutardialdehyd bevorzugt, da sie vergleichsweise leicht zugänglich sind und eine ausgezeichnete desinfizierende Wirkung ausüben. Mit besonderem Vorteil, d.h. mit besonders guter Wirksamkeit, wird als desinfizierender Wirkstoff in die erfindungsgemäßen Desinfektionsmittelzusammensetzungen Formaldehyd eingearbeitet.

Als aliphatische Alkohole kommen Methanol, Ethanol, n-Propanol, i-Propanol, n-Butanol, i-Butanol oder t-Butanol in Frage. Bevorzugt werden Methanol, Ethanol, n-Propanol und i-Propanol verwendet, wobei i-Propanol aufgrund seiner guten desinfizierenden Wirksamkeit als besonders bevorzugt zu nennen ist.

Aus der Gruppe der unsubstituierten oder substituierten Phenole kommen beispielsweise Phenol selbst, Kresole und substituierte, beispielsweise chlorierte Phenole und Kresole in Frage. Bevorzugt wird p-Chlorm-kresol in den erfindungsgemäßen Zusammensetzungen eingesetzt, doch kommen auch andere Phenolbzw. Kresolderivate wie o-Kresol, m-Kresol, p-Kresol, o-Phenylphenol, Pentachlorphenol oder Hexachlorophen in Frage. Aus der Gruppe der Phenole sind Phenol und chlorierte Phenole besonders bevorzugt.

Erfindungsgemäß können die Desinfektionsmittelzusammensetzungen als Desinfektionswirkstoffe auch Aktivchlor-, Aktivsauerstoff- und Aktivjodverbindungen enthalten. Beispiele für Verbindungen aus dieser Gruppe sind wasserlösliche Alkalimetallhypohalogenite, Wasserstoffperoxid, Peroxycarbonsäuren mit 1 bis 4 C-Atomen und deren wasserlösliche Salze sowie PVP-Jod (Polyvinylpyrrolidon-Jod). Als Peroxycarbonsäuren kommen Peroxyameisensäure, Peroxyessigsäure, Peroxypropionsäure oder Peroxybuttersäure in Betracht, wobei Peroxyessigsäure besondere Bedeutung hat, während die bevorzugte Aktivchlorverbindung Natriumhypochlorit ist.

Bei den Sulfattensiden der Formel (I) handelt es sich um Fettalkoholsulfate, wenn der Index m gleich Null ist, und um Fettalkoholethersulfate, wenn der Index m von Null verschieden ist. Beide Verbindungsgruppen stellen bekannte Substanzklassen dar, die nach gängigen Verfahren der organischen Synthese herstellbar sind. Die Fettalkoholsulfate können beispielsweise durch Umsetzung von Fettalkoholen mit Sulfatierungsmitteln wie Schwefeltrioxid oder Chlorsulfonsäure und anschließende Neutralisation der Reaktionsprodukte erhalten werden. In analoger Weise lassen sich die Fettalkoholethersulfate aus Anlagerungsprodukten von Ethylenoxid und/oder Propylenoxid an Fettalkohole durch Sulfatierung herstellen.

Der in der Formel (I) enthaltene Alkyl- oder Alkenylrest $R^1$ stammt aus einem nativen oder synthetischen Fettalkohol mit 8 bis 18 C-Atomen oder aus einem Gemisch solcher Fettalkohole. Wenn die durch das Strukturelement $-(C_nH_{2n}O)_m-$ dargestellte Polyalkylenglykoletherkette Ethylenglykol- und Propylenglykolreste enthält, so können die entsprechenden Anlagerungsprodukte von Ethylenoxid und Propylenoxid an Fettalkohole sowohl durch Blockpolymerisation als auch durch Randompolymerisation erhalten worden sein.

In einer bevorzugten Ausführungsform der Erfindung enthalten die wässrigen Desinfektionsmittelzusammensetzungen Sulfattenside der Formel (I), in der $R^1$ für Alkylreste mit 10 und/oder 12 C-Atomen, m für 0 und M für Natrium oder Ammonium stehen.

In einer weiteren bevorzugten Ausführungsform der Erfindung bestehen die Sulfattenside der Formel (I) aus Verbindungen, in denen $R^1$ für Alkylreste mit 10, 12 und/oder 14 C-Atomen, n für 2, m für Zahlen von 1 bis 5 und M für Natrium stehen.

Die Erfindung bezieht sich sowohl auf die gebrauchsfertigen wässrigen Desinfektionsmittelzusammensetzungen als auch auf Konzentrate, die zur Herstellung der gebrauchsfertigen Desinfektionsmittel zur Verfügung gestellt werden. Je nach der Wirksamkeit der desinfektionsaktiven Wirkstoffe, die einzeln oder in Kombination miteinander eingesetzt werden, können die Desinfektionsmittelzusammensetzungen, bezogen auf das Gesamtgewicht der wässrigen Präparationen, von 0,1 bis 80 Gew.-% des Desinfektionswirkstoffes der oben definierten Gruppe enthalten. An Sulfattensiden der Formel (I) können die Desinfektionsmittelzusammensetzungen, bezogen auf das Gesamtgewicht der wässrigen Präparationen, von 0,5 bis 50 Gew.-% enthalten. Dabei ist die Konzentration abhängig von der mehr oder weniger ausgeprägten Fähigkeit der Sulfattenside, die natürliche Hülle der parasitären Dauerformen permeabel zu machen. Die zur direkten Anwendung bestimmten gebrauchsfertigen Desinfektionsmittelzusammensetzungen enthalten in der Regel, bezogen auf ihr Gesamtgewicht, insbesondere 0,1 bis 5 Gew.-% Desinfektionswirkstoff und 0,5 bis 3 Gew.-% Sulfattensid der Formel (I). Entsprechende Desinfektionsmittelkonzentrate werden zweckmäßigerweise so formuliert, daß sie, bezogen auf das Gesamtgewicht der wässrigen Zusammensetzung, 5 bis 80 Gew.-% Desinfektionswirkstoffe aus der oben definierten Gruppe und 10 bis 50 Gew.-% Sulfattenside der Formel (I) enthalten.

In einer speziellen Ausführungsform der Erfindung enthalten die wässrigen Desinfektionsmittelzusammensetzungen neben den Sulfattensiden der Formel (I) mindestens einen endgruppenverschlossenen Fettalkoholpolyalkylenglykolether der Formel (II),

$$R^2 - O - (C_nH_{2n}O)_m - R^3 \qquad (II)$$

in der $R^2$ für einen geradkettigen oder verzweigten Alkyl- oder Alkenylrest mit 8 bis 18 C-Atomen, $R^3$ für einen geradkettigen oder verzweigten Alkylrest mit 1 bis 18 C-Atomen, n für 2 oder 3 und m für eine Zahl im Bereich von 1 bis 50 stehen.

Bei den Verbindungen der Formel (II) handelt es sich um bekannte Substanzen, die nach gängigen Verfahren organischen Synthese erhältlich sind. Beispielsweise können diese endgruppenverschlossenen Fettalkoholpolyalkylenglykolether dadurch erhalten werden, daß man entsprechende Anlagerungsprodukte des Ethylenoxids und/oder Propylenoxids im Zuge einer Williamson-Ethersynthese in Gegenwart von konzentrierten wässrigen Alkalimetallhydroxidlösungen mit Alkylhalogeniden umsetzt.

Der in der Formel (II) erscheinende Alkyl- oder Alkenylrest $R^2$ stammt aus einem nativen oder synthetischen Fettalkohol mit 8 bis 18 C-Atomen oder aus einem Gemisch solcher Fettalkohole. Wenn die durch das Strukturelement $-(C_nH_{2n}O)_m-$ dargestellte Polyalkylenglykoletherkette gleichzeitig Ethylenglykol- und Propylenglykolreste enthält, so können die entsprechenden Alkyl- und/oder Alkenylpolyalkylenglykolether sowohl durch Block- als auch durch Randompolymerisation erhalten worden sein.

Aus der Gruppe der endgruppenverschlossenen Fettalkoholpolyalkylenglykolether kommen insbesondere solche in Betracht, bei denen in der Formel (II) $R^2$ für einen geradkettigen Alkylrest mit 12 bis 18 C-Atomen, $R^3$ für einen geradkettigen oder verzweigten Alkyl rest mit 3 oder 4 C-Atomen, n für 2 und m für Zahlen von 3 bis 10 stehen. Besonders bevorzugt werden hierbei Verbindungen, bei denen in der Formel (II) $R^2$ für ein Gemisch aus Alkyl- und Alkenylresten mit 12 bis 18 C-Atomen und $R^3$ für einen n-Butylrest stehen, während n = 2 ist und m im Bereich von 8 bis 10 liegt. Es hat sich gezeigt, daß erfindungsgemäße wässrige Desinfektionsmittelzusammensetzungen, die als oberflächenaktive Wirkstoffe eine Kombination aus Verbindungen der Formel (I) und Verbindungen der Formel (II) enthalten, sich durch eine besonders gute Wirksamkeit gegenüber den Dauerformen von Ascariden (Spulwürmern) auszeichnen. Für die wässrigen Desinfektionsmittelzusammensetzungen dieser speziellen Ausführungsform der Erfindung gelten bezüglich der Konzentrationen der vorhandenen Wirkstoffe die weiter oben gemachten Angaben in dem Sinn, daß die endgruppenverschlossenen Fettalkoholpolyalkylenglykolether der Formel (II) einen Teil der Sulfattenside der Formel (I) ersetzen. Dabei kann das Gewichtsverhältnis der Verbindungen der Formel (I) zu den Verbindungen der Formel (II) im Bereich von 1 : 0,1 bis 1 : 1 liegen.

Neben den Desinfektionswirkstoffen aus der weiter oben definierten Gruppe können in die erfindungsgemäßen Zusammensetzungen weitere bekannte Desinfektionswirkstoffe eingearbeitet werden, um ein möglichst breites Wirkungsspektrum auch gegenüber Pilzen, Bakterien und Viren zu erzielen. Die erfindungsgemäßen Zusammensetzungen können zusätzlich beispielsweise quartäre Ammoniumverbindungen, insbesondere Alkylbenzyldimethylammoniumhalogenide mit 10 bis 14 C-Atomen im Alkylrest, und antimikrobiell wirksame Biguanidverbindungen, wie Halogenwasserstoffsalze von oligomeren Hexamethylenbiguaniden und wasserlösliche Salze von Chlorhexidin enthalten.

Mit dem Ziel, durch die erfindungsgemäßen wässrigen Desinfektionsmittelzusammensetzungen auch bestimmte Reinigungseffekte zu erreichen, können in die Zusammensetzungen außer den oberflächenaktiven Verbindungen der Formeln (I) und (II) auch noch andere bekannte nichtionische, anionische, kationische oder ampholytische oberflächenaktive Substanzen eingearbeitet werden. Darüberhinaus können den erfindungsgemäßen Zusammensetzungen die in solchen Mitteln üblichen Duft- und Farbstoffe sowie zur Einstellung eines bestimmten pH-Wertes Alkalien oder Mineralsäuren zugesetzt werden.

In einer besonders bevorzugten Ausführungsform enthalten wässrige Desinfektionsmittelzusammensetzungen mit ausgezeichneter Wirkung sowohl gegen Spulwurmeier als auch gegen Coccidienoozysten mindestens einen Desinfektionswirkstoff aus der aus Formaldehyd, i-Propanol, p-Chlor-m-kresol, Natriumhypochlorit, Wasserstoffperoxid, Peroxyessigsäure und PVP-Jod bestehenden Gruppe, Sulfattenside der Formel (I) und endgruppenverschlossene Fettalkoholpolyalkylenglykolether der Formel (II), wobei auch für diese Zusammensetzungen die weiter oben gemachten Mengen-, bzw. Konzentrationsangaben gelten.

Die erfindungsgemäßen wässrigen Desinfektionsmittelzusammensetzungen mit parasitenabtötender Wirkung kommen in der Regel als Konzentrate in den Handel, die maximal 35 Gew.-% Wasser enthalten. Vor der Anwednung zur Desinfektion gegen parasitäre Dauerformen, beispielsweise in Geflügel-, Schweine- oder Rinderställen, werden die Desinfektionsmittelkonzentrate mit Wasser so weit verdünnt, daß sie gebrauchsfertige Lösungen ergeben, die, bezogen auf ihr Gesamtgewicht, 0,1 bis 5 Gew.-% Desinfektionswirkstoff und 0,5 bis 3 Gew.-% Sulfattensid der Formel (I) oder eines Gemisches aus Sulfattensid der Formel (I) und endgruppenverschlossem Fettalkoholpolyalkylenglykolether der Formel (II) enthalten.

Die gebrauchsfertigen wässrigen Desinfektionsmittelzusammensetzungen werden in üblicher Weise in den für die Tierhaltung benutzten Räumlichkeiten wie Stallungen, Tierboxen oder -käfigen auf die Flächen versprüht oder in den von Parasiten befallenen Räumen vernebelt und bewirken bei gleichmäßiger Verteilung eine sichere Abtötung der invasionsfähigen parasitären Dauerformen. Ein besonderer Vorteil der erfindungsgemäßen Desinfektionsmittel bzw. der mit ihnen hergestellten verdünnten Anwendungslösung besteht darin, daß weder bei der Herstellung noch beim Versprühen giftige oder brennbare Dämpfe auftreten, wie sie aus früheren Desinfektionsmitteln, die $CS_2$ oder perhalogenierte Kohlenwasserstoffe enthielten, bekannt waren. Dadurch wird die Gefahr von Explosionen oder Bränden wie auch die Gefahr einer Vergiftung von Personal oder Nutztieren auf ein Minimum reduziert, wenn nicht ganz beseitigt. Zudem zeigen derartige Desinfektionsmittel eine hervorragende Wirksamkeit bei der Bekämpfung parasitärer invasionsfähiger Dauerformen, wie beispielsweise Spulwurmeiern und/oder Coccidienoozysten. Die erfindungsgemäßen Desinfektionsmittel erreichen in der beschriebenen Verwendung deutlich bessere Ergebnisse, als sie nach den Richtlinien für die Prüfung chemischer Desinfektionsmittel der Deutschen Veterinärmedizinischen Gesellschaft (DVG) gefordert werden. Nach diesen Richtlinien darf ein Präparat nur dann als wirksam deklariert werden, wenn damit bei Ascarideneiern eine Abtötungsrate von über 90 % erzielt wird; bei den invasionsfähigen Dauerformen der Coccidien müssen alle Oozysten so weit denaturiert werden, daß sie nicht mehr infektiös sind. Mit den erfindungsgemäßen Mitteln ist eine Abtötungsrate von über 98 % bei Eiern und eine praktisch quantitative Vernichtungsrate bei den Oozysten schon bei Anwendungskonzentrationen und Einwirkungszeiten zu erreichen, die deutlich unter den Werten für aus dem Stand der Technik bekannte Desinfektionsmittel für den gleichen Zweck liegen.

Die Erfindung wird durch die nachfolgenden Beispiele näher erläutert.

Beispiele

Beispiele 1 bis 4

Auf der Grundlage der folgenden Standardrezeptur

| (GT = Gewichtsteile) | |
|---|---|
| 30 GT | Isopropanol (80 %ig) |
| 25 GT | Sulfattensid der Formel (I) |
| 15 GT | eines mit n-Butylresten endgruppenverschlossenen Anlagerungsproduktes von 9 Mol Ethylenoxid an 1 Mol Fettalkohol der Kettenlänge $C_{12}$-$C_{18}$ (50 %ig) |
| 12 GT | p-Chlor-m-kresol |
| 6 GT | Natriumpentadecansulfonat (94 %ig) |
| 0,525 GT | Phosphorsäure (75 %ig) |
| 11,475 GT | vollentsalztes Wasser |

wurden Desinfektionsmittelkonzentrate zusammengestellt und so lange gerührt bis alle Bestandteile gelöst waren. Als Sulfattensid der Formel III wurden die in der nachstehenden Tabelle I angegebenen Verbindun-

5

gen in die Konzentrate eingearbeitet.

Bei der Prüfung der erfindungsgemäßen Mittel auf ihre Wirksamkeit wurden jeweils 5 Volumenteile Konzentrat mit vollentsalztem Wasser auf 200 Volumenteile gebrauchsfertige Desinfektionsmittellösung aufgefüllt.

Zur Prüfung der Wirksamkeit der Desinfektionsmittel an parasitären Dauerformen wurden sporulierte Oozysten (infektiöse Stadien) der Hühnercoccidiose verwendet. Jeweils 50 ml der gebrauchsfertigen Desinfektionsmittellösung wurden mit so viel Coccidienoozysten versetzt, daß deren Konzentration 2000 Stück/ml betrug. In einer Schüttelapparatur wurden die Proben 4 Stunden lang bei Raumtemperatur geschüttelt. Danach wurden die festen Bestandteile der Proben abzentrifugiert und in 50 ml gesättigter Natriumchloridlösung aufgeschlämmt. An aliquoten Anteilen der dabei erhaltenen Suspensionen wurde in einer Zählkammer nach MacMaster die Anzahl der überlebenden Oozysten ermittelt und durch Vergleich mit einer Blindprobe (2000 Oozysten/ml in vollentsalztem Wasser), die der gleichen Schüttelbehandlung unterworfen war, die Abtötungsrate ermittelt.

Als Vergleichszusammensetzung diente ein Desinfektionsmittel des Standes der Technik (DE-OS 23 17 225), das folgende Zusammensetzung hatte:

| 40 GT | Isopropanol (80 %ig) |
| 20 GT | Perchlorethylen |
| 16 GT | p-Chlor-m-kresol |
| 8 GT | Natriumpentadecansulfonat (94 %ig) |
| 0,7 GT | Phosphorsäure (75 %ig) |
| 15,3 GT | vollentsalztes Wasser |

Auch hier wurden zur Herstellung der gebrauchsfertigen Desinfektionsmittellösung 5 Volumenteile Konzentrat mit vollentsalztem Wasser auf 100 Volumenteile aufgefüllt.

Die mit den vorstehend beschriebenen Zusammensetzungen erzielten Abtötungsraten sind in der letzten Spalte der Tabelle I angegeben.

TABELLE I

| Wirksamkeit der Zusammensetzungen mit einem Gehalt an Verbindungen der Formel (III) gegan Coccidienoocysten | | | | |
|---|---|---|---|---|
| $R^1 - O - (C_2H_4O)_m - OSO_3M$ (III) | | | | |
| Beispiel | $R^1$ | m | M | Abtötungsrate (%) |
| 1 | $C_{10}H_{21}$ | 0 | Na | 92 |
| 2 | $C_{12}H_{25}$ | 0 | NH$_4$ | 93 |
| 3 | 50% $C_{12}H_{25}$ 50% $C_{14}H_{29}$ | 3,5 | Na | 99,5 |
| 4 | 70% $C_{12}H_{25}$ 30% $C_{14}H_{29}$ | 2 | Na | 99,5 |
| Vergleichszusammensetzung | | | | 88,5 |

Beispiel 5

Aus den folgenden Komponenten wird ein Desinfektionsmittelkonzentrat zusammengestellt und so lange gerührt bis alle Bestandteile gelöst sind:

6

| 65 GT | Wasserstoffperoxidlösung (65 %ig) |
|---|---|
| 15 GT | eines mit n-Butylresten endgruppenverschlossenen Anlangerungsproduktes von 9 Mol Ethylenoxid an 1 Mol Fettalkohol der Kettenlänge $C_{12}$-$C_{18}$ (50 %ig) |
| 20 GT | des Sulfattensids aus Beispiel 3. |

Zur Anwendung gegen parasitäre Dauerformen (z.B. Oozysten der Hühnercoccidiose oder Eier des Schweinespulwurms) werden 5 Volumenteile des Konzentrats mit Wasser auf 100 Volumenteile gebrauchsfertige Lösung aufgefüllt.

Beispiel 6

Aus den folgenden Komponenten wird ein Desinfektionsmittelkonzentrat zusammengestellt und so lange gerührt bis eine homogene Lösung entstanden ist:

| 20,7 GT | Formaldehyd (37 %ig) |
|---|---|
| 20,7 GT | Glyoxal (40 %ig) |
| 5,2 GT | Glutaraldehyd (50 %ig) |
| 3,45 GT | Oligohexamethylenbiguanid-hydrochlorid (n = 4-6) (20 %ig) |
| 3,7 GT | $C_{12}$-$C_{14}$-Alkylbenzyldimethylammoniumchlorid |
| 1,4 GT | Natriumbenzoat |
| 15 GT | des Sulfattensids der Formel (III) aus Beispiel 2 |
| 1,2 GT | Natriumhydroxidlösung (50 %ig) |
| 3,65 GT | Farbstoff, Parfüm und vollentsalztes Wasser |

Zur Herstellung von gebrauchsfertigen Lösungen werden 5 Volumenteile Konzentrat mit Wasser auf 100 Volumenteile aufgefüllt.

**Ansprüche**

1. Wässrige Desinfektionsmittelzusammensetzungen zur Bekämpfung und Abtötung von parasitären, invasionsfähigen Dauerformen auf der Basis von Gemischen aus Desinfektionswirkstoffen und oberflächenaktiven Wirkstoffen, dadurch gekennzeichnet, daß sie
a) mindestens einen Desinfektionswirkstoff aus der aus aliphatischen Aldehyden mit 1 bis 5 C-Atomen, aliphatischen Alkoholen mit 1 bis 4 C-Atomen, unsubstituierten und substituierten Phenolen, Aktivchlor-Aktivsauerstoff- und Aktivjodverbindungen bestehenden Gruppe und
b) mindestens ein Sulfattensid der allgemeinen Formel (I)
$R^1$ - O - $(C_nH_{2n}O)_m$ - $SO_3$ M     (I)
in der $R^1$ für einen geradkettigen oder verzweigten, Alkyl-oder Alkenylrest mit 8 bis 18 C-Atomen, M für Wasserstoff, Lithium, Natrium, Kalium, Ammonium, $C_{1-4}$-Alkylammonium oder $C_{1-4}$-Alkanolammonium, n für 2 oder 3 und m für eine Zahl von 0 bis 15 stehen,
enthalten.
2. Wässrige Desinfektionsmittelzusammensetzungen nach Anspruch 1, dadurch gekennzeichnet, daß sie mindestens einen Desinfektionswirkstoff aus der Gruppe Formaldehyd, Glyoxal, Glutardialdehyd, Methanol, Ethanol, n-Propanol, i-Propanol, Phenol, chlorierte Phenole, wasserlösliche Alkalimetallhypohalogenite, Wasserstoffperoxid, Peroxycarbonsäuren mit 1 bis 4 C-Atomen und PVP-Jod enthalten.
3. Wässrige Desinfektionsmittelzusammensetzungen nach mindestens einem der Ansprüche 1 und 2, dadurch gekennzeichnet, daß sie einen oder mehrere Desinfektionswirkstoffe aus der Gruppe Formaldehyd, i-Propanol, p-Chlor-m-kresol, Natriumhypochlorid, $H_2O_2$, Peroxyessigsäure und PVP-Jod enthalten.
4. Wässrige Desinfektionsmittelzusammensetzungen nach mindestens einem der Ansprüche 1 bis 3, dadurch gekennzeichen, daß sie mindestens ein Sulfattensid der Formel (I) enthalten, in der $R^1$ für Alkylreste mit 10 und/oder 12 C-Atomen, m für 0 und M für Natrium oder Ammonium stehen.

7

5. Wässrige Desinfektionsmittelzusammensetzungennach mindestens einem der Ansprüche 1 bis 3, dadurch gekennzeichnet, daß sie mindestens ein Sulfattensid der Formel (I) enthalten, in der $R^1$ für Alkylreste mit 10, 12 und/oder 14 C-Atomen, n für 2, m für Zahlen von 1 bis 5 und M für Natrium stehen.

6. Wässrige Desinfektionsmittelzusammensetzungen nach mindestens einem der Ansprüche 1 bis 5, dadurch gekennzeichnet, daß sie, bezogen auf ihr Gesamtgewicht,
0,1 bis 80 Gew.-% Desinfektionswirkstoffe aus der in Anspruch 1 definierten Gruppe und
0,5 bis 50 Gew.-% Sulfattenside der Formel (I) in Anspruch 1
enthalten.

7. Wässrige Desinfektionsmittelzusammensetzungen nach Anspruch 6, dadurch gekennzeichnet, daß sie, bezogen auf ihr Gesamtgewicht,
5 bis 80 Gew.-% Desinfektionswirkstoffe aus der in Anspruch 1 definierten Gruppe und
10 bis 50 Gew.-% Sulfattenside der Formel (I) in Anspruch 1
enthalten.

8. Wässrige Desinfektionsmittelzusammensetzungen nach mindestens einem der Ansprüche 1 bis 7, dadurch gekennzeichnet, daß sie als oberflächenaktive Wirkstoffe neben den Sulfattensiden der Formel (I) in Anspruch 1 mindestens einen endgruppenverschlossenen Fettalkoholpolyalkylenglykolether der Formel (II) enthalten,

$$R^2 - O - (C_nH_{2n}O)_m - R^3 \qquad (II)$$

in der $R^2$ für einen geradkettigen oder verzweigten Alkyl-oder Alkenylrest mit 8 bis 18 C-Atomen $R^3$ für einen geradkettigen oder verzweigten Alkylrest mit 1 bis 18 C-Atomen, n für 2 oder 3 und m für eine Zahl im Bereich von 1 bis 50 stehen.

9. Wässrige Desinfektionsmittelzusammensetzungenbach Anspruch 8, dadurch gekennzeichnet, daß sie mindestens einen endgruppenverschlossenen Fettalkoholpolyalkylenglykolether der Formel (II) enthalten, in der $R^2$ für einen geradkettigen Alkylrest mit 12 bis 18 C-Atomen, $R^3$ für einen geradkettigen oder verzweigten Alkylrest mit 3 oder 4 C-Atomen, n für 2 und m für Zahlen von 3 bis 10 stehen.

10. Wässrige Desinfektionsmittelzusammensetzungen nach mindestens einem der Ansprüche 8 und 9, dadurch gekennzeichnet, daß sie die Verbindungen der Formel (I) und der Formel (II) im Gewichtsverhältnis im Bereich von 1 : 0,1 bis 1 : 1 enthalten.

11. Wässrige Desinfektionsmittelzusammensetzungen nach mindestens einem der Ansprüche 8 bis 10, dadurch gekennzeichnet, daß sie
a) mindestens einen Desinfektionswirkstoff aus der aus Formaldehyd, i-Propanol, p-Chlor-m-kresol, Natriumpypochlorit, Wasserstoffperoxid, Peroxyessigsäure und PVP-Jod, sowie
b) mindestens ein Sulfattensid der Formel (I) und
c) mindestens einen endgruppenverschlossenen Fettalkoholpolyalkylenglykolether der Formel (II)
enthalten.

12. Verwendung der wässrigen Desinfektionsmittelzusammensetzungen nach den Ansprüchen 1 bis 11 zur Bekämpfung und Abtötung von parasitären invasionsfähigen Dauerformen.

13. Verwendung der Desinfektionsmittelzusammensetzungen nach den Ansprüchen 1 bis 11 zur Bekämpfung und Abtötung von Spulwurmeiern und Coccidienoozysten.

14. Verwendung der Desinfektionsmittel nach den Ansprüchen 1 bis 11 zur Bekämpfung und Abtötung von parasitären invasionsfähigen Dauerformen in verdünnten wässrigen Lösungen, die, bezogen auf ihr Gesamtgewicht, 0,1 bis 5 Gew.-% Desinfektionswirkstoff und 0,5 bis 3 Gew.-% Sulfattensid der Formel (I) oder eines Gemisches aus Sulfattensid der Formel (I) und endgruppenverschlossene Fettalkoholpolyalkylenglykolether der Formel (II) enthalten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 259 249 (CIBA-GEIGY) <br> * Ansprüche; Seite 4, Zeile 20; Seite 5, Zeilen 47-60; Beispiele * <br> --- | 1-14 | A 01 N 25/30 <br> A 01 N 31/02 <br> A 01 N 31/08 <br> A 01 N 35/02 <br> A 01 N 37/16 <br> A 01 N 59/00 <br> A 01 N 59/12 |
| X | DD-A- 218 631 (VEB LEUNA-WERKE) <br> * Seite 4, Zeilen 8-19 * <br> --- | 1-14 | |
| X | FR-A-2 224 170 (HENKEL) <br> * Ansprüche; Seite 2, Zeilen 13-21 * & <br> DE-A-2 317 225 (Kat. D) <br> --- | 1-14 | |
| X,P | EP-A-0 265 825 (HENKEL) <br> * Ansprüche * <br> --- | 1-14 | |
| X | AT-B- 329 775 (SCHÜLKE & MAYR) <br> * Tabelle 1 * <br> --- | 1-7,12-14 | |
| X | AT-B- 372 108 (W. SIN) <br> * Ansprüche * <br> --- | 1-7,12-14 | |
| X | US-A-4 490 270 (W.J. HACKET et al.) <br> * Spalte 1, Zeilen 57-59 * <br> --- | 1-7,12-14 | RECHERCHIERTE SACHGEBIETE (Int. Cl.4) |
| X | US-A-4 157 977 (N.E. DEWAR et al.) <br> * Spalte 2, Zeile 42 - Spalte 3, Zeile 18 * <br> --- | 1-7,12-14 | A 01 N |
| X | GB-A- 858 030 (RECKITT & SONS) <br> * Seite 6; Ansprüche 1,4 * <br> --- | 1-7,12-14 | |
| X | GB-A-1 453 198 (COALITE AND CHEMICAL PRODUCTS) <br> * Ansprüche * <br> --- | 1-7,12-14 | |
| X | EP-A-0 147 223 (STERWIN) <br> * Ansprüche 1,8,9 * <br> ---     -/- | 1-7,12-14 | |

Der vorliegende Recherchenbericht wurde für alle Patentansprüche erstellt

| Recherchenort | Abschlußdatum der Recherche | Prüfer |
|---|---|---|
| DEN HAAG | 21-07-1989 | DECORTE D. |

**Europäisches
Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 572 419 (DIVERSEY FRANCE)<br>* Ansprüche 1,4,6 *<br>--- | 1-7,12-14 | |
| A | CHEMICAL ABSTRACTS, Band 104, Nr. 7, 17. Februar 1986, Seite 182, Zusammenfassung Nr. 47059g, Columbus, Ohio, US; V.F. ABRAMOVA et al.: "Deinfestation media in coccidiosis of rabbits", & PROFIL. PARAZIT. BOLEZN. ZHITOVN. 1985, 30-3<br>------ | 1-3,11-14 | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 21-07-1989 | DECORTE D. |

EPO FORM 1503 03.82 (P0403)